# EUROPÄISCHE PATENTSCHRIFT

(11) **EP 1 171 843 B1**
(45) Veröffentlichungstag und Bekanntmachung des Hinweises auf die Patenterteilung: **25.09.2002**
(21) Anmeldenummer: 00925156.2
(22) Anmeldetag: 31.03.2000
(51) Int. Cl.: G06K 7/08

(54) **TISCH MIT INTEGRIERTEM LESEGERÄT**
DESK COMPRISING AN INTEGRATED READING DEVICE
BUREAU AVEC LECTEUR INTEGRE

(30) Priorität: 31.03.1999 DE 19914732
(43) Veröffentlichungstag der Anmeldung: 16.01.2002
(73) Patentinhaber: Iglseder, Heinrich, 31552 Rodenberg (DE)
(72) Erfinder: IGLSEDER, Heinrich, 31552 Rodenberg (DE); FIESELER, Martin, D-45134 Essen (DE)
(74) Vertreter: Meissner & Bolte Patentanwälte
(86) Internationale Anmeldenummer: EP0002912
(87) Internationale Veröffentlichungsnummer: WO00060525

(56) Entgegenhaltungen:
- WO-A-97/13432
- WO-A-97/15213
- DE-C- 4 015 482
- DE-C- 19 542 214

## Beschreibung

Die Erfindung betrifft einen Tisch mit einer Schnittstelle zum Anschluß eines Datenverarbeitungssystems gemäß dem Oberbegriff des Anspruches 1.

Viele Arbeitsplätze sind heutzutage mit einem Computer ausgestattet. Dabei werden auf dem Tisch u.a. der Monitor, die Tastatur und die Maus plaziert, wobei die Verbindung mit dem Computer üblicherweise über Kabelverbindungen erfolgt. Für jedes elektrische Gerät ist zudem eine Steckdose erforderlich, so daß insgesamt eine Vielzahl von Kabeln und Steckern vorhanden ist. Zum Verstauen dieser Kabel und Stecker hat man bereits Arbeitstische mit sogenannten Kabelkanälen entworfen. Ferner sind auch in der Tischoberfläche integrierte Schnittstellen bekannt, die beispielsweise als Steckdose für den Netzanschluß oder als Verbindung zu einem Computer ausgebildet sind. Diese. aus der Praxis bekannten Lösungen ermöglichen bereits das Verstauen eines Großteils der vorhandenen Kabel und Steckdosen. Oftmals sind jedoch noch Geräte vorhanden, die Kabel benötigen, die äußerst störend quer über den ganzen Tisch verlaufen. Dies ist insbesondere bei der Tastatur und der Maus eines Computers der Fall.

Aus der WO 97/13 432 ist ein Computerarbeitstisch bekannt, bei dem das Datenverarbeitungssystem im Tisch integriert ist. Ferner ist u.a. für die Kommunikation zwischen der Maus und dem Datenverarbeitungssystem eine IR-Verbindung vorgesehen. Werden bei diesem System in der Übertragungsverbindung zwischen dem in der Maus vorgesehenen Infrarotsender und dem am Tisch vorgesehenen Infrarotempfänger Gegenstände, beispielsweise Bücher oder dergleichen, abgelegt, kann es zu Informationsverlusten kommen.

Aus der DE-C-40 15 482 ist ein Tisch gemäß dem Oberbegriff des Anspruches 1 bekannt, bei dem es sich um ein System zur berührungslosen Authentisierung des Nutzers einer Datenendeinrichtung eines Datenverarbeitungssystems handelt. Der Nutzer trägt hierbei einen schwer verlierbaren Identifikationsträger mit sich. Ein Abstandsleser fragt kontinuierlich die persönliche Nutzerkennung auf dem Identifikationsträger ab. Der Abstandsleser besteht prinzipiell aus einer Sende- und Empfangsspule sowie einer elektronischen Baugruppe. Typischerweise ist zumindest die Sende- und Empfangsspule sehr nahe bei der Eingabetastatur, beispielsweise in die Schreibtischunterlage vor der Tastatur eingearbeitet. Im Betrieb umgibt sie sich mit einem niederfrequenten magnetischen Wechselfeld, das auf die Anwesenheit des Identifikationsträgers reagiert, welcher am Handgelenk des beispielsweise vor dem Bildschirm sitzenden und die Tastatur berührenden Nutzers angebracht ist.

Aus der DE-C-195 42 214 ist ferner ein Kommunikationssystem bekannt, das aus einer zentralen und mindestens einer kabellosen periphären Komunikationseiuheit besteht, die über eine elektromagnetische Kopplung miteinander in Verbindung stehen und einen Datenverkehr aufweisen.

Der Erfindung liegt nun die Aufgabe zugrunde, einen Tisch gemäß dem Oberbegriff des Anspruches 1 zu schaffen, bei dem sich die Mittel zum Erfassen der Modulation eines elektromagnetischen Feldes auf einfache Art und Weise unterbringen lassen.

Diese Aufgabe wird erfindungsgemäß durch die Merkmale des Anspruches 1 gelöst.

Weitere Ausgestaltungen der Erfindung sind Gegenstand der Unteransprüche.

Weitere Ausgestaltungen der Erfindung werden anhand der nachfolgenden Beschreibung einiger Ausführungsbeispiele und der Zeichnung näher erläutert.

In der Zeichnung zeigen
- Fig.1: eine schematische, dreidimensionale Darstellung eines Tisches mit diversen Geräten,
- Fig.2: ein Schaltbild eines Lesegerätes,
- Fig.3: ein Schaltbild eines Transponders,
- Fig.4: eine Querschnittsdarstellung im Bereich der Tischkante gemäß einem ersten Ausführungsbeispiel und
- Fig.5: eine Querschnittsdarstellung im Bereich der Tischkante gemäß einem zweiten Ausführungsbeispiel.

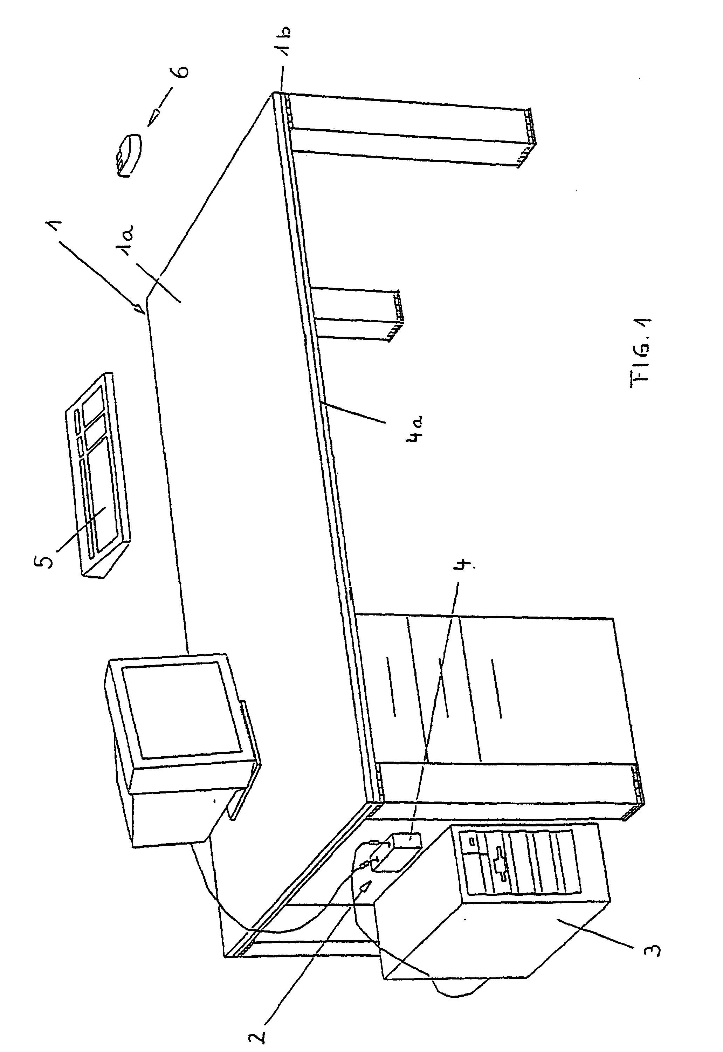

Das in Fig.1 dargestellte Möbelsystem wird durch einen Tisch 1 gebildet, der eine Schnittstelle 2 zum Anschluß eines Datenverarbeitungssystems, insbesondere eines Rechners 3 aufweist. Der Tisch sieht ferner ein integriertes Lesegerät 4 vor, das Modulationen eines elektromagnetischen Feldes erfaßt und ein der Modulation entsprechendes Signal zur Schnittstelle 2 weiterleitet.

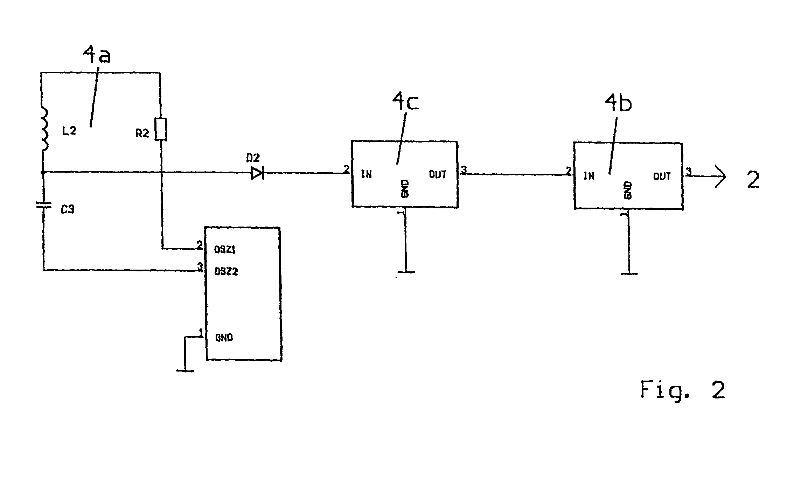

In Fig.2 ist das Lesegerät 4 in einem Blockschaltbild näher dargestellt. Er besteht im wesentlichen aus Mitteln 4a zum Erfassen einer durch einen Transponder hervorgerufenen Modulation eines elektromagnetischen Feldes sowie Mitteln 4b zur Erzeugung und Weiterleitung eines der Modulation entsprechenden Signals zur Schnittstelle 2. Die Mittel 4a werden beispielsweise durch eine Antenne, insbesondere eine Spule gebildet. Durch einen Filter 4c werden lediglich die hier interessierenden Signale an die Mittel 4b weitergeleitet, die üblicherweise durch einen Mikroprozessor realisiert werden.

Das zur Übertragung von Signalen zwischen Transponder und Lesegerät erforderliche elektromagnetische Feld wird im dargestellten Ausführungsbeispiel ebenfalls durch das Lesegerät erzeugt, so daß die Mittel 4a sowohl als Empfangs- als auch als Sendeantenne dienen. Das elektromagnetische Feld wird hier durch den aus einer Spule L2, einem Kondensator C3, einem Widerstand R2 und einem Oszillator bestehenden Schwingkreis erzeugt.

Die Tischplatte 1a weist Kanten auf, die mit Elementen 1b zum Schutz der Kante vor Beschädigungen durch Stöße versehen ist.

Die für die Erzeugung des elektromagnetischen Feldes bzw. für die Erkennung des modulierten elektromagnetischen Feldes erforderliche Spule ist im Bereich dieser Elemente 1b angeordnet.

Die weiteren Bestandteile des Lesegerätes, insbesondere der Filter 4c und der Mikroprozessor 4b können an jeder beliebigen, geeigneten Stelle des Tisches eingebaut bzw. angebracht werden. Im dargestellten Ausführungsbeispiel gemäß Fig.1 sind lediglich die Spulen im Bereich der Elemente 1b vorgesehen, während die restliche Elektronik des Lesegerätes und die Schnittstelle 2 seitlich am Tisch angebracht sind. Vorteilhafterweise kommuniziert das Lesegerät 4 mit der Datenverarbeitungsanlage 3 über eine Standardschnittstelle (z.B. RS232, Centronics usw. insbesondere einer Maus und/oder Tastaturschnittstelle).

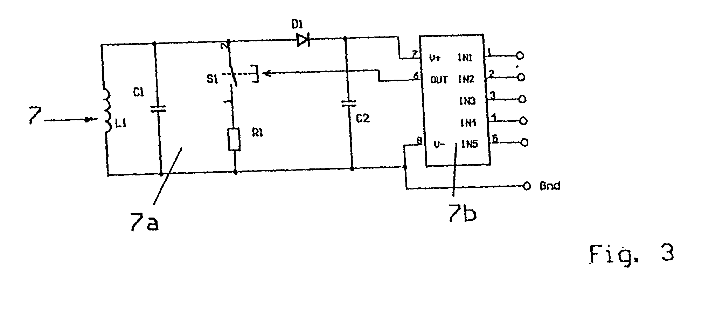

Die mit dem Lesegerät 4 zusammenwirkenden Komponenten, die üblicherweise auf dem Tisch 1 abgestellt werden, beinhalten einen entsprechenden Transponder 7. Der mit dem Lesegerät 4 zusammenwirkende Transponder 7 ist im dargestellten Ausführungsbeispiel in einer Tastatur 5 und in einer Maus 6 untergebracht. Der in Fig.3 näher dargestellte Transponder 7 besteht im wesentlichen aus einem Schwingkreis 7a und einem Prozessor 7b, der insbesondere einen Schalter S1 steuert, über den das elektromagnetische Feld amplitudenmoduliert werden kann. Die Besonderheit des Transponders 7 besteht darin, daß er keine eigene Stromversorgung benötigt, sondern vielmehr die für seinen Betrieb erforderliche Energie aus dem elektromagnetischen Feld zieht.

Der Prozessor 7b steht mit den einzelnen Tasten der Tastatur 5 bzw. mit dem Sensor der Maus in Wirkverbindung, um das elektromagnetische Feld derart zu modulieren, daß das Lesegerät in der Lage ist, ein Signal zu erzeugen, das dem herkömmlicherweise über die Kabelverbindung zwischen Maus und Rechner bzw. Tastatur und Rechner übertragenen Signal entspricht.

Durch ein derartiges System kann über die Maus bzw. die Tastatur mit dem Rechner frei kommuniziert werden, ohne daß eine entsprechende Kabelverbindung erforderlich ist. Wird die Tastatur bzw. die Maus nicht mehr benötigt, kann diese ohne weiteren Aufwand beispielsweise in einer Schublade verstaut werden.

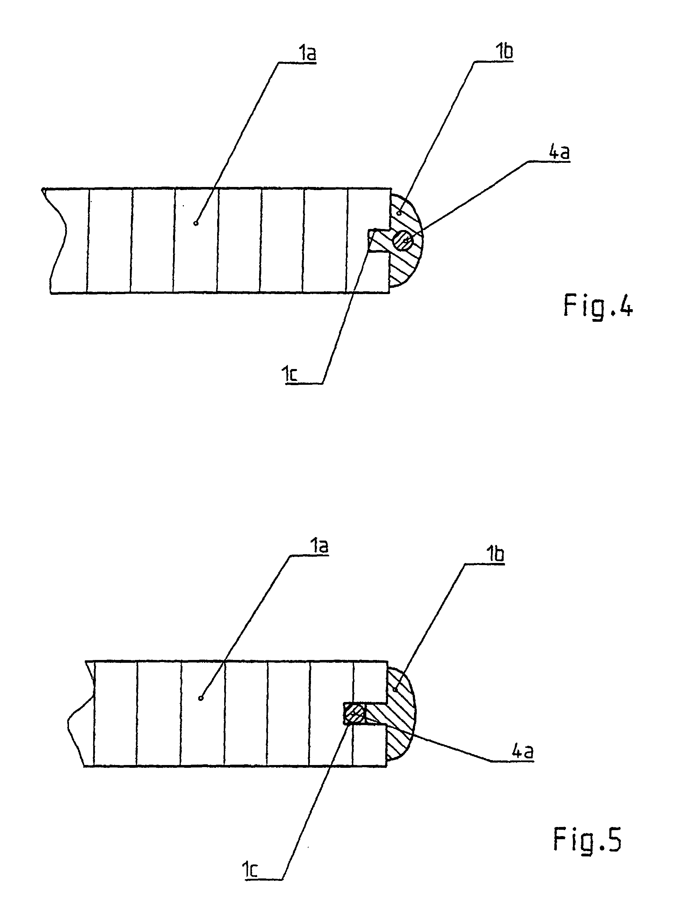

In den Figuren 4 und 5 sind zwei Ausführungsbeispiele für die Anordnung der Mittel 4a im Bereich der Elemente zum Schutz der Kante vor Beschädigungen durch stöße dargestellt.

Im ersten Ausführungsbeispiel gemäß Fig.4 sind die Mittel 4a, d.h. insbesondere, die Spule, in den Elementen 1b integriert. Das Element 1b kann beispielsweise nach Art eines Umleimers oder, wie dargestellt, in einer in der Tischplatte 1a vorgesehenen Ausnehmung 1c gehaltert werden.

Beim zweiten Ausführungsbeispiel gemäß Fig.5 sind die Mittel 4a zum Erfassen der Modulation des elektromagnetischen Feldes in der das Element 1b aufnehmenden Ausnehmung 1c der Tischplatte 1a angeordnet. Die Mittel 4a zum Erfassen der Modulation des elektromagnetischen Feldes und das Element 1b können bei diesem Ausführungsbeispiel separat gefertigt werden, wobei die Mittel 4a vor der Anbringung des Elements 1b in die Ausnehmung 1c eingelegt werden.

Werden die Mittel 4a zum Erfassen der Modulation des elektromagnetischen Feldes im Bereich der Elemente 1b der Tischplatte angeordnet, können alle mit einem entsprechenden. Transponder ausgestatteten Gegenstände erfaßt werden, die an irgendeiner Stelle auf dem Tisch abgelegt werden. Durch die Größe der Spule können unter Umständen auch Transponder in der Nähe des Tisches erfaßt werden.

Die Erfindung läßt sich jedoch nicht nur dann sinnvoll einsetzen, wenn der Transponder in einer Tastatur oder einer Maus untergebracht sind. So ist durchaus denkbar, daß Akten und/oder Ordner oder dergleichen mit Transpondern versehen sind, so daß über eine entsprechende Software sofort erkannt werden kann, wenn ein bestimmter Ordner oder eine bestimmte Akte auf dem Tisch abgelegt wird oder sich in der Nähe des Tisches befindet. Auf diese Weise kann beispielsweise jederzeit der Aufenthaltsort einer bestimmten Akte über das Computersystem festgestellt werden.

Der für diesen Zweck erforderliche Transponder ist wesentlich einfacher aufgebaut, da er lediglich eine einstellbare bzw. wählbare Kennung aussenden muß, die vom Lesegerät zu seiner Identifizierung ausgewertet wird.

## Patentansprüche

1. Tisch (1), mit einer Tischplatte (1a) und einer elektrischen Schnittstelle (2) zum Anschluß eines Datenverarbeitungssystems, wobei im Tisch ein mit einem Transponder (7) zusammenwirkendes Lesegerät (4) integriert ist, wobei das Lesegerät (4) Mittel (4a) zum Erfassen einer durch den Transponder hervorgerufenen Modulation eines elektromagnetischen Feldes sowie Mittel (4b) zur Erzeugung und Weiterleitung eines der Modulation entsprechenden Signals zur Schnittstelle des Tisches enthält,
**dadurch gekennzeichnet, daß** die Tischplatte (1a) Kanten (1b) aufweist, die mit Elementen (1b) zum Schutz der Kante vor Beschädigungen durch Stöße versehen sind, wobei die Mittel (4a) zum Erfassen der Modulation des elektromagnetischen Feldes im Bereich dieser Elemente (1b) angeordnet sind.

2. Tisch nach Anspruch 1, **dadurch gekennzeichnet, daß** das Lesegerät (4) ferner Mittel (4a) zur Erzeugung des elektromagnetischen Feldes aufweist.

3. Tisch nach Anspruch 2, **dadurch gekennzeichnet, daß** die Mittel (4a) zum Erfassen der Modulation des elektromagnetischen Feldes durch wenigstens eine Antenne gebildet werden.

4. Tisch nach Anspruch 2, **dadurch gekennzeichnet, daß** die Mittel (4a) zum Erfassen der Modulation des elektromagnetischen Feldes durch eine Spule gebildet werden.

5. Tisch nach Anspruch 2, **dadurch gekennzeichnet, daß** die Mittel zum Erfassen der Modulation des elektromagnetischen Feldes auch zur Erzeugung des elektromagnetischen Feldes ausgebildet sind.

6. Tisch nach einem oder mehreren der vorhergehenden Ansprüche, **dadurch gekennzeichnet, daß** die Mittel (4a) zum Erfassen der Modulation des elektromagnetischen Feldes in den Elementen (1b) zum Schutz der Kante vor Beschädigungen durch Stöße integriert sind.

7. Tisch nach einem oder mehreren der Ansprüche 1 bis 5, **dadurch gekennzeichnet, daß** die Mittel (4a) zum Erfassen der Modulation des elektromagnetischen Feldes in einer das Element (1b) zum Schutz der Kante vor Beschädigungen durch Stöße aufnehmenden Ausnehmung (1c) der Tischplatte (1a) angeordnet sind.

## Claims

1. Table (1), with a table top (1a) and an electrical interface (2) for connection of a data processing system, with a reader (4) which interacts with a transponder (7) being integrated in the table, and with the reader (4) containing means (4a) for detection of any modulation, caused by the transponder, of an electromagnetic field, and having means (4b) for production of and passing on a signal, which corresponds to the modulation, to the interface of the table,
**characterized in that** the table top (1a) has edges (1b) which are provided with elements (1b) for protection of the edge against damage due to impacts, the means (4a) for detection of the modulation of the electromagnetic field being arranged in the area of these elements (1b).

2. Table according to Claim 1, **characterized in that** the reader (4) furthermore has means (4a) for production of the electromagnetic field.

3. Table according to Claim 2, **characterized in that** the means (4a) for detection of the modulation of the electromagnetic field are formed by at least one antenna.

4. Table according to Claim 2, **characterized in that** the means (4a) for detection of the modulation of the electromagnetic field are formed by a coil.

5. Table according to Claim 2, **characterized in that** the means for detection of the modulation of the electromagnetic field are also designed to produce the electromagnetic field.

6. Table according to one or more of the preceding claims, **characterized in that** the means (4a) for detection of the modulation of the electromagnetic field are integrated in the elements (1b) for protection of the edge against damage due to impacts.

7. Table according to one or more of Claims 1 to 5,
**characterized in that** the means (4a) for detection of the modulation of the electromagnetic field are arranged in a recess (1c) in the table top (1a), which recess (1c) holds the element (1b) for protection of the edge against damage due to impacts.

## Revendications

1. Table (1), avec un plateau (1a) et une interface (2) électrique pour le raccordement d'un système de traitement de données, un lecteur (4) coopérant avec un transpondeur (7) étant intégré dans la table, le lecteur (4) contenant des moyens (4a) pour l'enregistrement d'une modulation, causée par le transpondeur, d'un champ électromagnétique ainsi que des moyens (4b) pour la génération et la transmission d'un signal approprié à la modulation pour l'interface de la table.
**caractérisée en ce que** le plateau (1a) présente des arêtes (1b) qui sont pourvues d'éléments (1b) pour la protection de l'arête contre des détériorations par des chocs, les moyens (4a) pour l'enregistrement de la modulation du champ électromagnétique étant disposés dans la zone de ces éléments (1b).

2. Table selon la revendication 1, **caractérisé en ce que** le lecteur (4) présente également des moyens (4a) pour la production du champ électromagnétique.

3. Table selon la revendication 2, **caractérisé en ce que** les moyens (4a) pour l'enregistrement de la modulation du champ électromagnétique sont formés par au moins une antenne.

4. Table selon la revendication 2, **caractérisé en ce que** les moyens (4a) pour l'enregistrement de la modulation du champ électromagnétique sont formés par une bobine.

5. Table selon la revendication 2, **caractérisé en ce que** les moyens pour l'enregistrement de la modulation du champ électromagnétique sont conçus également pour la production du champ électromagnétique.

6. Table selon l'une quelconque ou plusieurs des revendications précédentes, **caractérisé en ce que** les moyens (4a) pour l'enregistrement de la modulation du champ électromagnétique sont intégrés dans les éléments (1b) pour la protection de l'arête contre des détériorations par des chocs.

7. Table selon l'une quelconque ou plusieurs des revendications 1 à 5, **caractérisé en ce que** les moyens (4a) pour l'enregistrement de la modulation du champ électromagnétique sont disposés dans un évidemment (1c) du plateau de table (1a) qui reçoit l'élément (1b pour la protection de l'arête contre des détériorations par des chocs.
